# EUROPEAN PATENT APPLICATION

(11) **EP 4 715 954 A1**
(43) Date of publication of application: **25.03.2026**
(21) Application number: 25768612.1
(22) Date of filing: 05.03.2025
(51) Int. Cl.: H01M 10/42, H01M 10/04, H01M 50/466, H01M 10/0583

(54) **ELECTRODE ASSEMBLY AND MANUFACTURING METHOD THEREOF**

(30) Priority: 08.03.2024 KR 20240033295
(71) Applicant: LG Energy Solution, Ltd., Seoul 07335 (KR)
(72) Inventor: AN, In Gu, Daejeon 34122 (KR); SHIN, Jung Il, Daejeon 34122 (KR)
(74) Representative: BCKIP Part mbB
(86) International application number: PCT/KR2025/002898
(87) International publication number: WO 2025/188056

(57) **Abstract**

An electrode assembly includes a separator sheet including a folding part folded in a zigzag shape to define a plurality of accommodation spaces separated in the vertical direction, and a cover part extending from the folding part and a cell structure accommodated in the plurality of accommodation spaces of the separator sheet. The cell structure includes a first electrode and a second electrode. The cover part of the separator sheet includes a first side cover part covering a first side surface of the cell structure, and the first side cover part includes a first through-hole communicating with at least one accommodation space of the plurality of accommodation spaces of the separator sheet.

## Description

### [Cross-Reference to Related Applications]

The present application claims priority from Korean Patent Application No. 10-2024-0033295, filed on March 8, 2024, the disclosures of which are incorporated herein by reference.

### [Technical Field]

The present disclosure relates to an electrode assembly and a method of manufacturing the same.

### [Background]

Unlike primary batteries, secondary batteries can be charged and discharged a plurality of times. Secondary batteries are widely used as an energy source in a variety of wireless devices, including handsets, laptops, and cordless vacuum cleaners. Typically, a secondary battery consists of an electrode assembly with stacked electrodes and separators embedded in a pouch-like battery case. If a gas trap occurs in the electrode assembly, an inactive area is formed on the surface of the electrode and lithium is precipitated during charging and discharging.

### [Technical Problem]

The technical challenge of the present disclosure is to provide an electrode assembly in which gas traps can be prevented from causing capacity degradation, increased cell resistance, lithium precipitation, and the like, and a method of manufacturing the same.

### [Technical Solution]

To address the above challenges, the technical idea of the present disclosure provides an electrode assembly including: a separator sheet including a folding part folded in a zigzag pattern to define a plurality of vertically separated accommodation spaces and a cover part extending from the folding part; and a cell structure accommodated in the plurality of accommodation spaces of the separator sheet, and including a first electrode and a second electrode, wherein the cover part of the separator sheet comprises a first side cover part covering a first side of the cell structure, wherein the first side cover part comprises a first through-hole communicating with at least one of the plurality of accommodation spaces of the separator sheet.

In exemplary aspects, the cover part of the separator sheet further includes a second side cover part covering a second side of the cell structure opposite the first side of the cell structure, the second side cover part including a second through-hole communicating with at least one of the plurality of accommodation spaces of the separator sheet.

In exemplary aspects, the cover part of the separator sheet further includes a third side cover part in contact with the first side cover part, the third side cover part including a third through-hole communicating with the first through-hole.

In exemplary aspects, the cover part of the separator sheet further includes: a first bottom cover part extending between the first side cover part and the second side cover part, and covering a bottom surface of the cell structure; and a top cover part extending between the second side cover part and the third side cover part, and covering the upper surface of the cell structure.

In exemplary aspects, the cover part of the separator sheet further includes a second bottom cover part connected to the third side cover part, the second bottom cover part being fixed to the first bottom cover part.

In exemplary aspects, the separator sheet is a single sheet.

In exemplary aspects, the cell structure includes a plurality of unit cells spaced apart from each other by the folding part of the separator sheet, each of the plurality of unit cells including at least one of the first electrode and the second electrode.

In exemplary aspects, in the cell structure, the first electrode is a single sheet extending in a zigzag fashion along the folding part of the separator sheet.

In exemplary aspects, in the cell structure, the second electrode is a single sheet extending in a zigzag fashion along the first electrode.

To address the above challenges, the technical idea of the present disclosure provides an electrode assembly manufacturing method including: preparing a structure comprising a separator sheet and a cell structure, wherein the cell structure includes a first electrode and a second electrode, and the separator sheet includes a folding part defining a plurality of accommodation spaces for accommodating the cell structure and a cover part connected to the folding part; a first perforation step of forming a first through-hole in a first side cover part of the cover part of the separator sheet; and a first winding step of winding the cover part of the separator sheet such that the first side cover part of the cover part faces a first side of the cell structure.

In exemplary aspects, the first winding step further includes winding the cover part of the separator sheet so that a first bottom cover part of the cover part of the separator sheet connected to the first side cover part of the cover part faces a bottom surface of the cell structure.

In exemplary aspect, the electrode assembly manufacturing method further includes: a second perforation step of forming a second through-hole in a second side cover part of the cover part of the separator sheet; and a second winding step of winding the cover part of the separator sheet such that the second side cover part of the cover part faces a second side of the cell structure.

In exemplary aspects, the second winding step further includes winding the cover part of the separator sheet so that a top cover part of the cover part of the separator sheet connected to the second side cover part of the cover part faces the upper surface of the cell structure.

In exemplary aspect, the electrode assembly manufacturing method further includes: a third perforation step of forming a third through-hole in a third side cover part of the cover part of the separator sheet; and a third winding step of winding the cover part of the separator sheet such that the third side cover part of the cover part contacts the first side cover part of the cover part of the separator sheet, wherein the first through-hole provided in the first side cover part of the cover part is aligned with the third through-hole provided in the third side cover part of the cover part.

In exemplary aspects, the first winding step further includes winding the cover part of the separator sheet so that a first bottom cover part of the cover part of the separator sheet connected to the first side cover part of the cover part faces a bottom surface of the cell structure, wherein the third winding step further includes winding the cover part of the separator sheet so that a second bottom cover part of the cover part of the separator sheet connected to the third side cover part of the cover part contacts the first bottom cover part of the separator sheet.

### [Advantageous Effects]

In exemplary aspects, the separator sheet of the electrode assembly includes gas discharging holes for discharging gases within the electrode assembly, so that gases within the electrode assembly can be quickly discharged to the outside of the electrode assembly during the degassing process, and gas traps within the electrode assembly can be prevented or inhibited from occurring. Accordingly, gas traps in the electrode assembly can be prevented from causing capacity degradation, increased cell resistance, lithium precipitation, and the like, and ultimately improve the reliability of the secondary battery including the electrode assembly.

According to exemplary aspects, a winding process of winding the cover part of the separator sheet can be performed after the perforation process of forming through-holes in the cover part of the separator sheet is completed to prevent damage to the unit cell during the perforation process.

The effects that may be obtained from the exemplary aspects of the present disclosure are not limited to those mentioned above, and other effects not mentioned may be clearly derived and understood by one of ordinary skill in the art to which the exemplary aspects of the present disclosure belong from the following description. That is, unintended effects of practicing the exemplary aspects of the present disclosure may also be derived from the exemplary aspects of the present disclosure by one of ordinary skill in the art.

### [Brief Description of the Drawings]

FIG. 1 is a perspective view illustrating an electrode assembly according to exemplary aspects.
FIG. 2 is a cross-sectional view illustrating an electrode assembly according to exemplary aspects.
FIG. 3 is a cross-sectional view illustrating a portion of a cell structure of an electrode assembly, according to exemplary aspects.
FIG. 4 is a flow diagram illustrating a method of manufacturing an electrode assembly, according to exemplary aspects.
FIGS. 5 through 11 are drawings illustrating a method of manufacturing an electrode assembly according to exemplary aspects.
FIG. 12 is a cross-sectional view illustrating a method of manufacturing an electrode assembly, according to exemplary aspects.
FIG. 13 is a cross-sectional view illustrating an electrode assembly according to exemplary aspects.
FIG. 14 is a cross-sectional view illustrating an electrode assembly according to exemplary aspects.

### [Detailed Description]

Hereinafter, preferred aspects of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the aspects described herein and the configurations shown in the drawings are only the most preferred aspects of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the aspects of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First aspect)

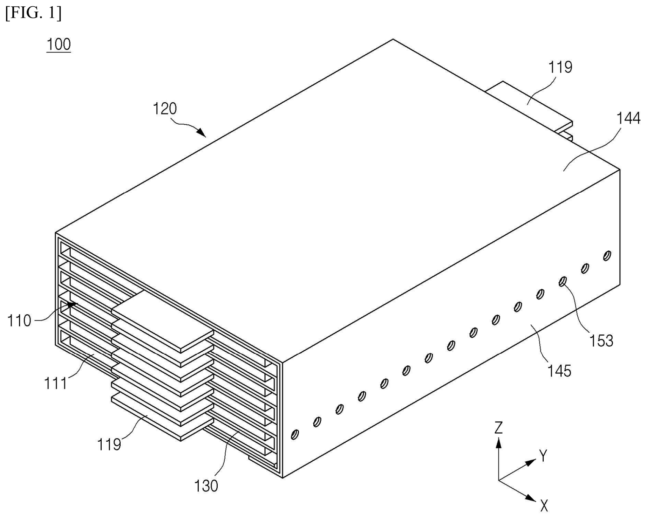

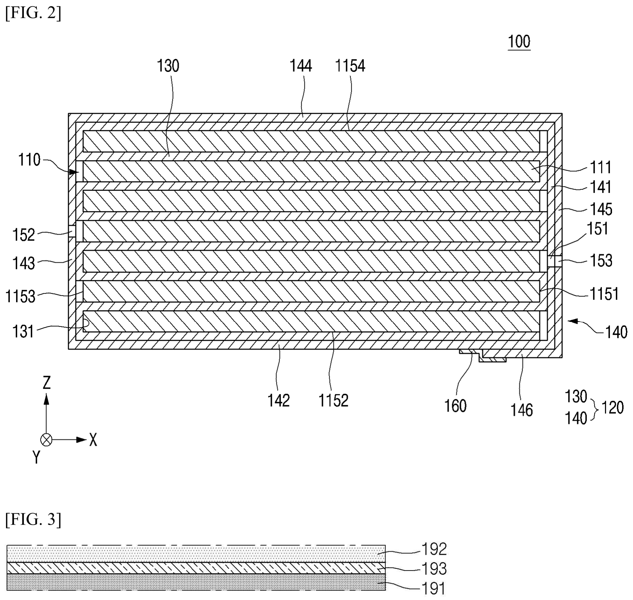

FIG. 1 is a perspective view illustrating an electrode assembly 100, according to exemplary aspects. FIG. 2 is a cross-sectional view illustrating an electrode assembly 100, according to exemplary aspects. FIG. 3 is a cross-sectional view illustrating a portion of the cell structure 110 of the electrode assembly 100, according to exemplary aspects.

Referring to FIGS. 1 through 3, the electrode assembly 100 may include a cell structure 110 and a separator sheet 120.

The cell structure 110 may comprise a secondary battery. The cell structure 110 may include a first electrode 191, a second electrode 192, or a stack of at least one first electrode 191 and at least one second electrode 192 stacked in a vertical direction (e.g., Z direction) separated by a separator 193. The separator 193 may also be referred to as an internal separator. Here, the first electrode 191 and the second electrode 192 may have opposite polarities. For example, the first electrode 191 may be a positive electrode and the second electrode 192 may be a negative electrode. Alternatively, the first electrode 191 may be a negative electrode and the second electrode 192 may be a positive electrode. The positive electrode may include a positive electrode current collector and a positive electrode active material. The negative electrode may include a negative electrode current collector and a negative electrode active material. The cell structure 110 may include an electrode tab 119 connected to the at least one positive electrode and/or the at least one negative electrode.

In exemplary aspects, the cell structure 110 may include a plurality of unit cells 111 stacked in a vertical direction (e.g., Z direction). The plurality of unit cells 111 may each have a single first electrode 191, a single second electrode 192, or may be a stack of at least one first electrode 191 and at least one second electrode 192 stacked in a vertical direction (e.g., Z direction) by a separator 193. In exemplary aspects, the individual unit cells 111 may include bi-cells or monocells. A bi-cell may have a stacked structure in which the two outermost electrodes are of the same type, such as positive electrode/separator/negative electrode/separator/positive electrode, positive electrode/separator/negative electrode/separator/positive electrode/separator/negative electrode/separator/positive electrode, negative electrode/separator/positive electrode/separator/negative electrode, negative electrode/separator/positive electrode/separator/negative electrode/separator/positive electrode/separator/negative electrode, etc. Monocells can have a stacked structure where the two outermost electrodes are of different types, such as positive electrode/separator/negative electrode, positive electrode/separator/negative electrode/separator/positive electrode/separator/negative electrode, etc.

The unit cell 111 may have a generally flat plate shape extending in a first horizontal direction (e.g., X direction) and a second horizontal direction (e.g., Y direction). The unit cell 111 may have an upper surface and a bottom surface opposed in the vertical direction (e.g., Z direction), a first side and a second side opposed in the first horizontal direction (e.g., X direction), and a front and a rear surface opposed in the second horizontal direction (e.g., Y direction). Electrode tabs 119 may be provided on the front and/or rear surface of the unit cell 111. The upper surface and bottom surface of the unit cell 111 may be planes extending in a first horizontal direction (e.g., X direction) and a second horizontal direction (e.g., Y direction), respectively, and may contact the separator sheet 120. In this case, the cell structure 110 may have an upper surface and a bottom surface that are opposed in a vertical direction (e.g., Z direction), a first side and a second side that are opposed in a first horizontal direction (e.g., X direction), and a front and a rear surface that are opposed in a second horizontal direction (e.g., Y direction). The first side 1151 of the cell structure 110 may include first sides of the plurality of unit cells 111, the second side 1153 of the cell structure 110 may include second sides of the plurality of unit cells 111, and the upper surface 1154 of the cell structure 110 may include the upper surface of the uppermost unit cell 111 of the plurality of unit cells 111, a bottom surface 1152 of the cell structure 110 may include a bottom surface of a bottom unit cell 111 that is the lowermost of the plurality of unit cells 111, a front surface of the cell structure 110 may include a front surface of the plurality of unit cells 111, and a rear surface of the cell structure 110 may include a rear surface of the plurality of unit cells 111. The unit cells 111 may have a short axis parallel to a first horizontal direction (e.g., X direction) and a long axis parallel to a second horizontal direction (e.g., Y direction), such that a length along the first horizontal direction (e.g., X direction) of the unit cells 111 may be less than a length along the second horizontal direction (e.g., Y direction) of the unit cells 111.
The separator sheet 120 may include a folding part 130 and a cover part 140. The separator sheet 120 may be a single sheet.

The folding part 130 may extend by being bent in a zigzag fashion to define a plurality of accommodation spaces 131 separated in a vertical direction (e.g., Z direction). A unit cell 111 may be disposed in each of the plurality of accommodation spaces 131 of the folding part 130. The folding part 130 may surround the individual unit cells 111, and the plurality of unit cells 111 may be spaced apart from each other by the folding part 130. Two adjacent unit cells 111 of the plurality of unit cells 111 may be spaced apart by a portion of the folding part 130. The folding part 130 may cover an upper surface, a bottom surface, and one side of the individual unit cell 111, but may not cover other side, front, and rear surfaces of the individual unit cell 111. For example, the plurality of unit cells 111 may include unit cells 111 in an odd numbered layer and unit cells 111 in an even numbered layer. The folding part 130 may extend along a bottom surface, a first side, and an upper surface of each of the unit cells 111 in the odd layer, and the second side, front, and rear surface of each of the unit cells 111 in the even layer may not be covered by the folding part 130. The folding part 130 may extend along the bottom surface, second side, and upper surface of each of the unit cells 111 in the even numbered layers, and may extend along the first side, front, and rear surfaces of each of the unit cells 111 in the even numbered layers.

The cover part 140 may extend from the folding part 130 and may be wound to surround the cell structure 110 and the folding part 130. The cover part 140 may be wound to surround the cell structure 110, forming an interior space to accommodate the cell structure 110. The cover part 140 may be connected to the folding part 130. For example, the folding part 130 may be connected to a portion of the folding part 130 that contacts an upper surface of the uppermost unit cell 111 and may be wound to cover the first side 1151, bottom surface, second side, and upper surface of the cell structure 110.

In exemplary aspects, the cover part 140 includes a first side cover part 141 that faces a first side 1151 of the cell structure 110 and at least partially covers the first side 1151 of the cell structure 110, a first bottom cover part 142 facing a bottom surface 1152 of the cell structure 110 and at least partially covering the bottom surface 1152 of the cell structure 110, a second side cover part 143 facing a second side 1153 of the cell structure 110 and at least partially covering the second side 1153 of the cell structure 110, a top cover part 144 facing the upper surface 1154 of the cell structure 110 and at least partially covering the upper surface 1154 of the cell structure 110, a third side cover part 145 contacting the first side cover part 141 and at least partially covering the first side cover part 141, and a second bottom cover part 146 contacting the first bottom cover part 142. The second bottom cover part 146 may be fixed to the first bottom cover part 142 by a tape 160. The first side cover part 141, the first bottom cover part 142, the second side cover part 143, the top cover part 144, the third side cover part 145, and the second bottom cover part 146 may be disposed sequentially between the folding part 130 and the end of the separator sheet 120.

The cover part 140 of the separator sheet 120 may include gas discharging holes for communicating between an interior space of the cover part 140 in which the cell structure 110 is accommodated and an exterior space on an exterior side of the cover part 140. In exemplary aspects, the first side cover part 141 may include a first through-hole 151, the second side cover part 143 may include a second through-hole 152, and the third side cover part 145 may include a third through-hole 153. The first through-hole 151 of the first side cover part 141, the second through-hole 152 of the second side cover part 143, and the third through-hole 153 of the third side cover part 145 may each communicate with at least one of the plurality of accommodation spaces 131 provided by the folding part 130 of the separator sheet 120. The first through-hole 151 of the first side cover part 141, the second through-hole 152 of the second side cover part 143, and the third through-hole 153 of the third side cover part 145 may constitute gas discharging holes of the separator sheet 120. The first through-hole 151 of the first side cover part 141 may be in communication with the third through-hole 153 of the third side cover part 145. Gases surrounding the electrode assembly 100 may be discharged to the exterior of the electrode assembly 100 through the first through-hole 151 of the first side cover part 141 and the third through-hole 153 of the third side cover part 145, and may be discharged to the exterior of the electrode assembly 100 through the second through-hole 152 of the second side cover part 143.

The first side cover part 141 may include a plurality of first through-holes 151. For example, the plurality of first through-holes 151 may be arranged in a second horizontal direction (e.g., Y direction). For example, the plurality of first through-holes 151 may be arranged to have a plurality of rows and a plurality of columns. The second side cover part 143 may include a plurality of second through-holes 152. For example, the plurality of second through-holes 152 may be arranged in a second horizontal direction (e.g., Y direction). For example, the plurality of second through-holes 152 may be arranged to have a plurality of rows and a plurality of columns. The third side cover part 145 may include a plurality of third through-holes 153. For example, the plurality of third through-holes 153 may be arranged in a second horizontal direction (e.g., Y direction). For example, the plurality of third through-holes 153 may be arranged to have a plurality of rows and a plurality of columns.

To manufacture a secondary battery including the electrode assembly 100, a loading process for receiving the electrode assembly 100 into a cell case, such as a pouch, an electrolyte injection process for injecting an electrolyte into the cell case, a charging and discharging process for the electrode assembly 100, a degassing process for removing internal gases within the electrode assembly 100, and a sealing process for sealing the cell case can be performed. If the internal gas in the electrode assembly 100 is not removed during the degassing process, a gas trap may occur within the electrode assembly 100, and the gas trap may cause capacity degradation, increased cell resistance, lithium precipitation, and the like, thereby reducing the reliability of the secondary battery.

In exemplary aspects, the separator sheet 120 of the electrode assembly 100 includes gas discharging holes for discharging gases within the electrode assembly 100, so that gases within the electrode assembly 100 can be quickly discharged to the outside of the electrode assembly 100 during the degassing process, and gas traps within the electrode assembly 100 can be prevented or inhibited from occurring. Accordingly, capacity degradation, increased cell resistance, lithium precipitation, and the like due to gas traps within the electrode assembly 100 may be prevented, and ultimately improve the reliability of a secondary battery including the electrode assembly 100.

### (Second aspect)

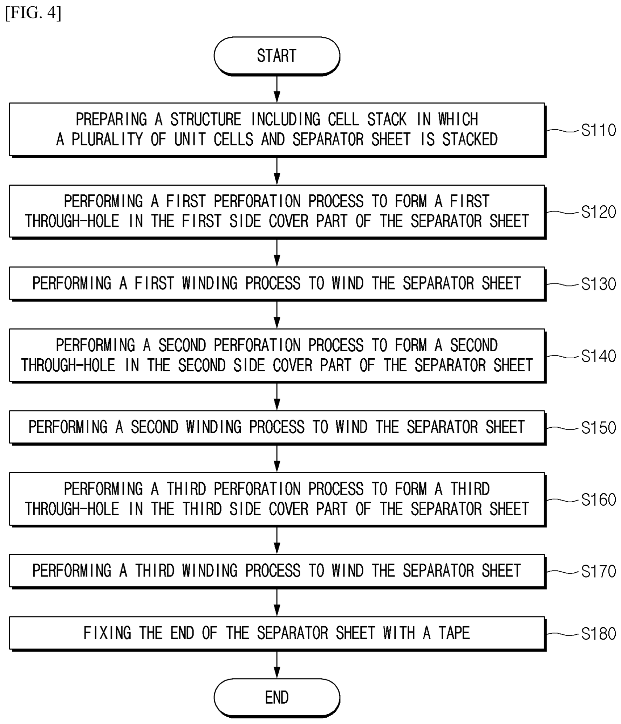

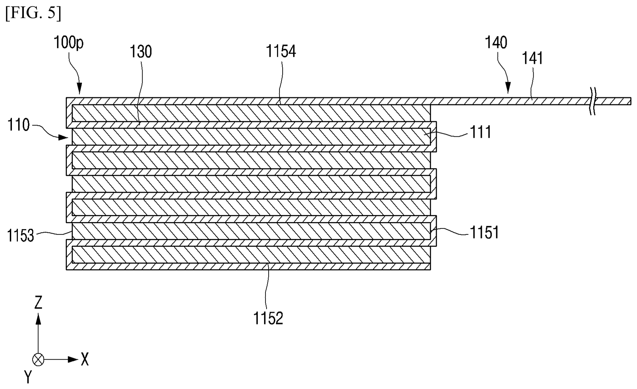

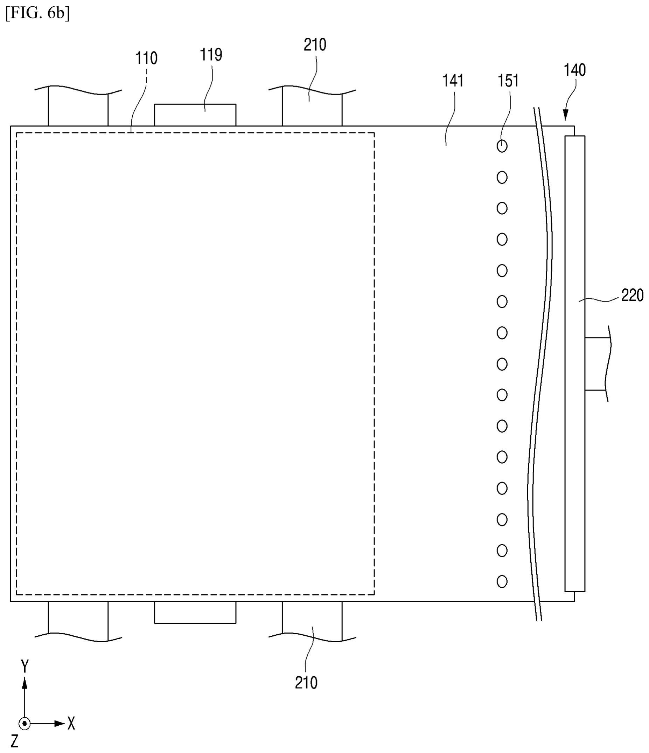

FIG. 4 is a flow diagram illustrating a method of manufacturing an electrode assembly 100 according to exemplary aspects. FIGS. 5 through 11 are drawings illustrating a method of manufacturing an electrode assembly 100 according to exemplary aspects, wherein FIGS. 5, FIG. 6a, FIG. 7, FIG. 8a, FIG. 9, FIG. 10a, and FIG. 11 are cross-sectional views illustrating a method of manufacturing an electrode assembly 100, and FIGS. 6b, FIG. 8b, and FIG. 10b are plan views illustrating a method of manufacturing an electrode assembly 100. Hereinafter, with reference to FIGS. 4 through 11, a method of manufacturing the electrode assembly 100 shown in FIGS. 1 through 3 will be described.

Referring to FIG. 5, a structure 100p including a plurality of unit cells 111 and a separator sheet 120 is prepared (S110). In the structure 100p, the separator sheet 120 may include a folding part 130 folded in a zigzag shape to enclose each of the plurality of unit cells 111, and a cover part 140 connected to the folding part 130.

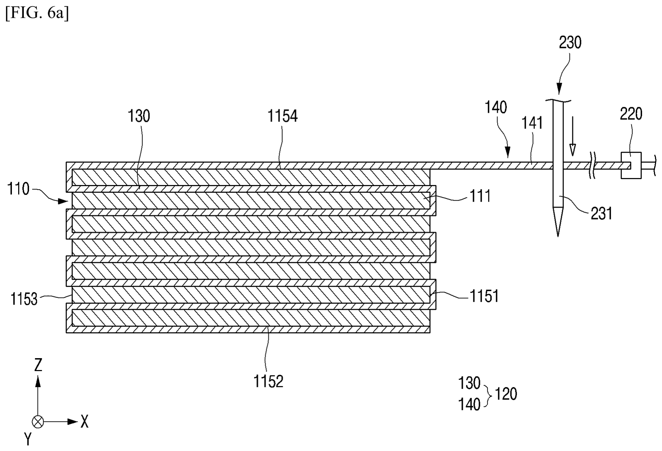

Referring now to FIGS. 6a and 6b, the structure (100p of FIG. 5) is introduced into a secondary battery manufacturing device configured to perform a perforation process on the cover part 140 of the separator sheet 120 and a winding process on the cover part 140 of the separator sheet 120. The secondary battery manufacturing device may include a holder 210 configured to support the cell structure 110, a gripper 220 configured to grip and support an end of the cover part 140 of the separator sheet 120, and a cutter 230 configured to perforate the cover part 140 of the separator sheet 120. The holder 210 may include a holding block for gripping the cell structure 110, and an actuator for moving the holding block. The gripper 220 may include a gripper block for gripping an end of the cover part 140 of the separator sheet 120, and an actuator for moving the gripper block. The cutter 230 may be configured to cut the cover part 140 of the separator sheet 120, thereby forming a through-hole in the separator sheet 120. In exemplary aspects, the cutter 230 may include at least one needle 231. The needle 231 can be moved to penetrate the cover part 140 of the separator sheet 120, forming a through-hole in the cover part 140 of the separator sheet 120.

When the structure 100p is introduced into the secondary battery manufacturing device, the secondary battery manufacturing device performs a first perforation process to form a first through-hole 151 in the first side cover part 141 of the separator sheet 120 (S120).

In step S120, the holder 210 may support the cell structure 110 and the gripper 220 may support the cover part 140 of the separator sheet 120. The gripper 220 may support the cover part 140 of the separator sheet 120 such that the first side cover part 141 of the separator sheet 120 does not cover the first side 1151 of the cell structure 110. For example, the gripper 220 may support the cover part 140 of the separator sheet 120 such that the first side cover part 141 of the separator sheet 120 extends in a first horizontal direction (e.g., X direction).

In step S120, while the gripper 220 is supporting the cover part 140 of the separator sheet 120, the cutter 230 may form a first through-hole 151 in the first side cover part 141 of the separator sheet 120 connected to the folding part 130 of the separator sheet 120. For example, the cutter 230 may move the needle 231 in a vertical direction (e.g., Z direction) such that the needle 231 penetrates the first side cover part 141 of the separator sheet 120, thereby forming the first through-hole 151 in the first side cover part 141 of the separator sheet 120. The cutter 230 may form a plurality of first through-holes 151 arranged in a second horizontal direction (e.g., Y direction) in the first side cover part 141 of the separator sheet 120.

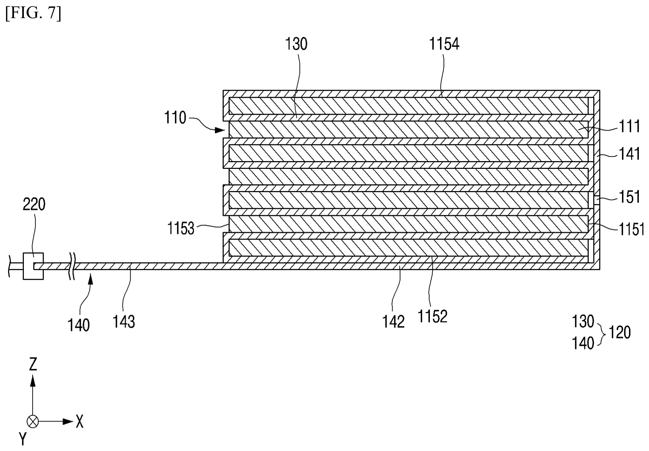

Referring to FIG. 7, after the first perforation process is completed, the secondary battery manufacturing device performs a first winding process S130 to wind the cover part 140 of the separator sheet 120 such that the first side cover part 141 of the separator sheet 120 covers the first side 1151 of the cell structure 110 and the first bottom cover part 142 of the separator sheet 120 covers the bottom surface 1152 of the cell structure 110.

In step S130, the first side cover part 141 of the separator sheet 120 faces the first side 1151 of the cell structure 110 and may contact a portion of the folding part 130 extending along the first side 1151 of the cell structure 110. And, the first bottom cover part 142 of the separator sheet 120 may contact a portion of the folding part 130 extending along the bottom surface 1152 of the cell structure 110.

In the step S130, winding the cover part 140 of the separator sheet 120 against the cell structure 110 may be accomplished by relative rotation between the cover part 140 of the separator sheet 120 and the cell structure 110. In exemplary aspects, the first winding process may be achieved by rotating the holder 210, which holds the cell structure 110 and the folding part 130, about an axis of rotation parallel to a second horizontal direction (e.g., Y direction) while the gripper 220 fixes the cover part 140 of the separator sheet 120. In exemplary aspects, the first winding process may be achieved by the gripper 220 moving such that the first side cover part 141 and the first bottom cover part 142 of the separator sheet 120 surround the cell structure 110 while the holder 210 fixes the cell structure 110 and the folding part 130.

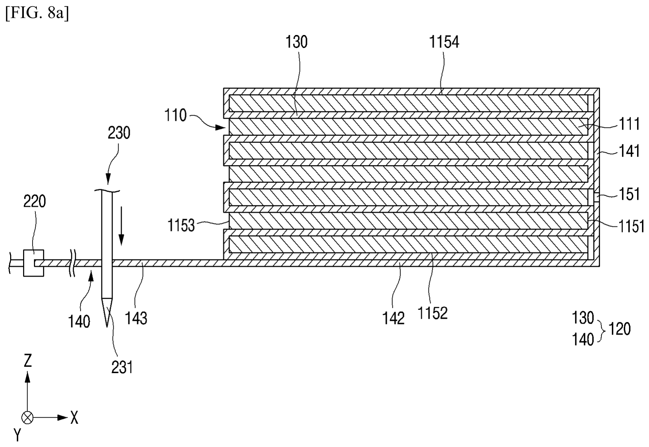

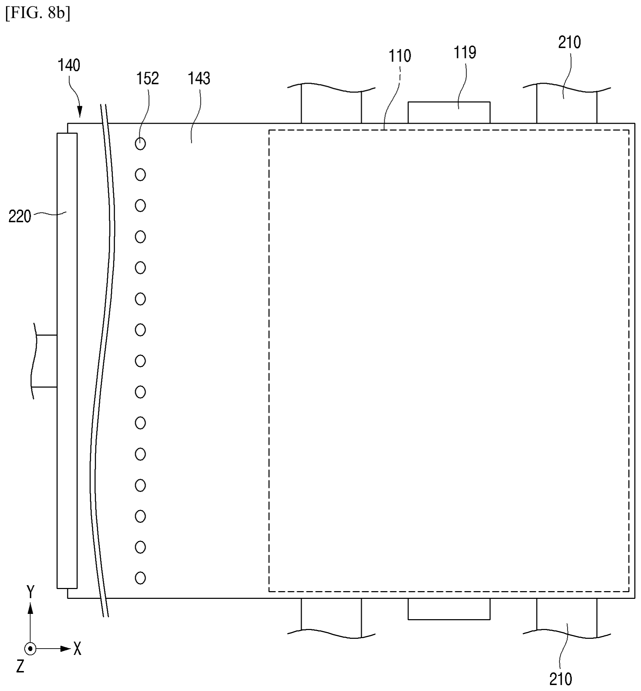

Referring to FIGS. 8a and 8b, after the first winding process is completed, the secondary battery manufacturing device performs a second perforation process to form a second through-hole 152 in the second side cover part 143 of the separator sheet 120 (S140).

At step S140, while the holder 210 is supporting the cell structure 110, the gripper 220 may support the cover part 140 of the separator sheet 120 such that the second side cover part 143 of the separator sheet 120 does not cover the second side 1153 of the cell structure 110. For example, the gripper 220 may support the cover part 140 of the separator sheet 120 such that the second side cover part 143 of the separator sheet 120 extends in a first horizontal direction (e.g., X direction).

At step S140, while the gripper 220 is supporting the cover part 140 of the separator sheet 120, the cutter 230 may form a second through-hole 152 in the second side cover part 143 of the separator sheet 120 that is connected to the first bottom cover part 142 of the separator sheet 120. For example, the cutter 230 may move the needle 231 in a vertical direction (e.g., Z direction) such that the needle 231 penetrates the second side cover part 143 of the separator sheet 120, thereby forming the second through-hole 152 in the second side cover part 143 of the separator sheet 120. The cutter 230 may form a plurality of second through-holes 152 arranged in a second horizontal direction (e.g., Y direction) in the second side cover part 143 of the separator sheet 120.

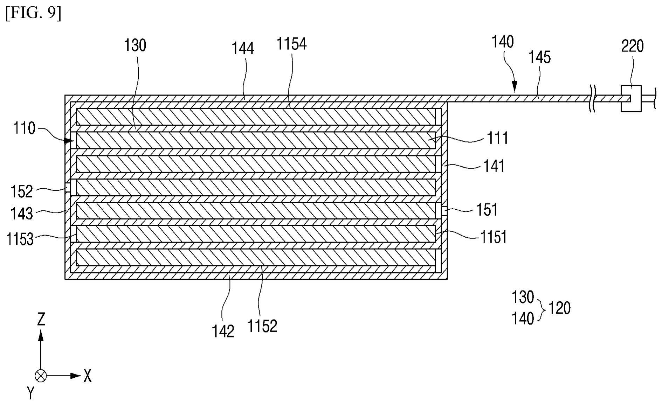

Referring to FIG. 9, after the second perforation process is completed, the secondary battery manufacturing device performs a second winding process to wind the cover part 140 of the separator sheet 120 such that the second side cover part 143 of the separator sheet 120 covers the second side 1153 of the cell structure 110 and the top cover part 144 of the separator sheet 120 covers the upper surface 1154 of the cell structure 110 (S150).

In step S150, the second side cover part 143 of the separator sheet 120 faces the second side 1153 of the cell structure 110 and may contact a portion of the folding part 130 extending along the second side 1153 of the cell structure 110. And, the top cover part 144 of the separator sheet 120 may contact a portion of the folding part 130 extending along the upper surface 1154 of the cell structure 110.

In the step S150, winding the cover part 140 of the separator sheet 120 against the cell structure 110 may be accomplished by relative rotation between the cover part 140 of the separator sheet 120 and the cell structure 110. In exemplary aspects, the second winding process may be achieved by rotating the holder 210, which holds the cell structure 110 and the folding part 130, about an axis of rotation parallel to a second horizontal direction (e.g., Y direction) while the gripper 220 fixes the cover part 140 of the separator sheet 120. In exemplary aspects, the second winding process may be achieved by the gripper 220 moving such that the second side cover part 143 and the top cover part 144 of the separator sheet 120 surround the cell structure 110 while the holder 210 fixes the cell structure 110 and the folding part 130.

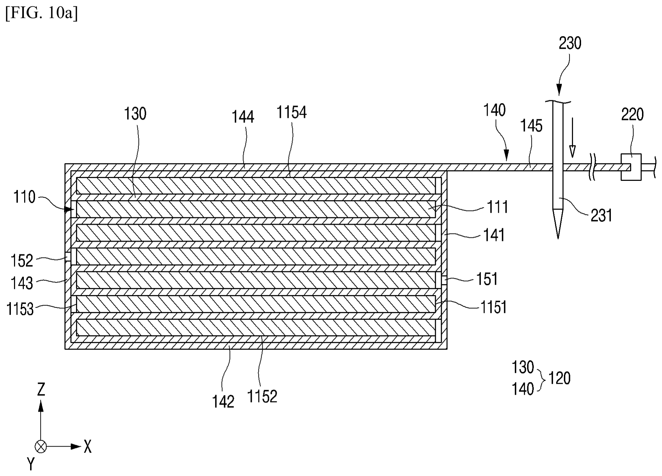

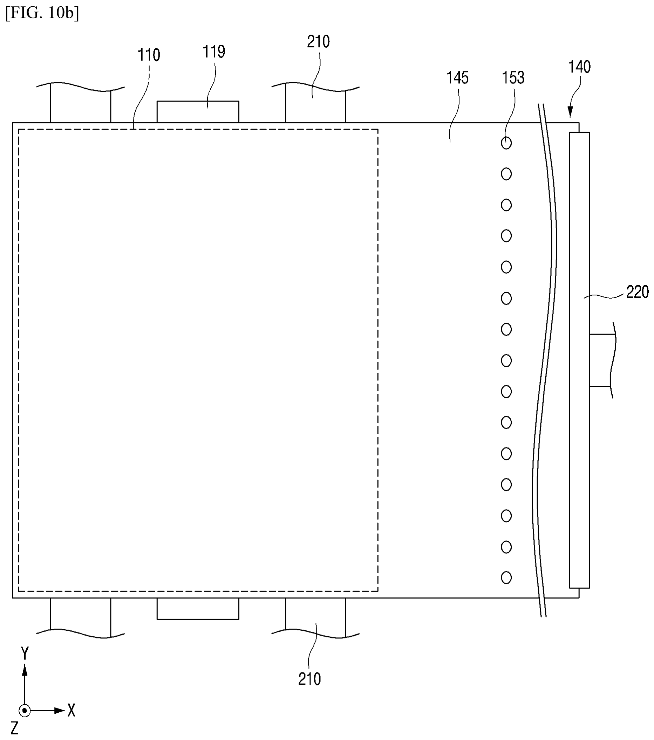

Referring to FIGS. 10a and 10b, after the second winding process is completed, the secondary battery manufacturing device performs a third perforation process S160 to form a third through-hole 153 in the third side cover part 145 of the separator sheet 120.

At step S160, while the holder 210 is supporting the cell structure 110, the gripper 220 may support the cover part 140 of the separator sheet 120 such that the third side cover part 145 of the separator sheet 120 does not cover the first side 1151 of the cell structure 110 and the first side cover part 141 of the separator sheet 120. For example, the gripper 220 may support the cover part 140 of the separator sheet 120 such that the third side cover part 145 of the separator sheet 120 extends in a first horizontal direction (e.g., X direction).

At step S160, while the gripper 220 is supporting the cover part 140 of the separator sheet 120, the cutter 230 may form a third through-hole 153 in the third side cover part 145 of the separator sheet 120 connected to the top cover part 144 of the separator sheet 120. For example, the cutter 230 may move the needle 231 in a vertical direction (e.g., Z direction) such that the needle 231 penetrates the third side cover part 145 of the separator sheet 120, thereby forming the third through-hole 153 in the third side cover part 145 of the separator sheet 120. The cutter 230 may form a plurality of third through-holes 153 arranged in a second horizontal direction (e.g., Y direction) in the third side cover part 145 of the separator sheet 120.

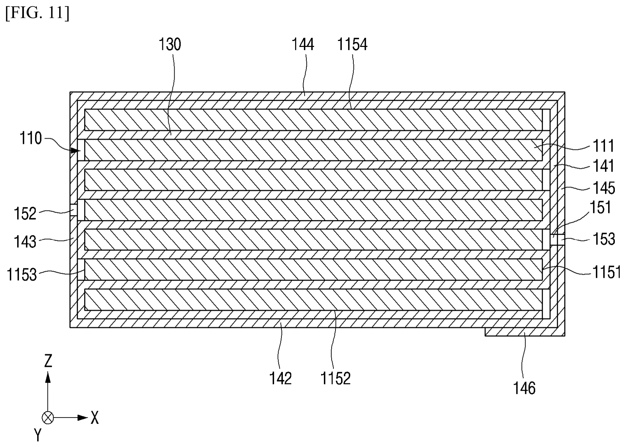

Referring to FIG. 11, after the third perforation process is completed, the secondary battery manufacturing device performs a third winding process S170 to wind the cover part 140 of the separator sheet 120 such that the third side cover part 145 of the separator sheet 120 contacts the first side cover part 141 of the separator sheet 120 and the second bottom cover part 146 of the separator sheet 120 contacts the first bottom cover part 142 of the separator sheet 120.

In step S170, a third side cover part 145 of the separator sheet 120 may cover the first side cover part 141 of the separator sheet 120. A third through-hole 153 of the third side cover part 145 may be in communication with a first through-hole 151 of the first side cover part 141. And, the second bottom cover part 146 of the separator sheet 120 may contact the first bottom cover part 142 of the separator sheet 120.

In the step S170, winding the cover part 140 of the separator sheet 120 about the cell structure 110 may be accomplished by relative rotation between the cover part 140 of the separator sheet 120 and the cell structure 110. In exemplary aspects, the third winding process may be achieved by rotating the holder 210, which holds the cell structure 110 and the folding part 130, about an axis of rotation parallel to the second horizontal direction (e.g., Y direction) while the gripper 220 fixes the cover part 140 of the separator sheet 120. In exemplary aspects, the third winding process may be achieved by moving the gripper 220 so that the third side cover part 145 and the second bottom cover part 146 of the separator sheet 120 surround the cell structure 110 while the holder 210 fixes the cell structure 110 and the folding part 130.

Referring to FIG. 1, after the third winding process is completed, the end of the cover part 140 of the separator sheet 120 is fixed with a tape 160 (S180). At step S180, the second bottom cover part 146 is fixed to the first bottom cover part 142 by the tape 160.

In the method of manufacturing the electrode assembly according to the comparative example, the cover part of the separator sheet is wound around the entire cover part of the separator sheet so that it surrounds the cell structure, and then through-holes for gas discharge are formed on both sides of the separator sheet. In this case, in the process of cutting the separator sheet with a cutter, there is a concern that the unit cell disposed adjacent to the cover part of the separator sheet may be damaged by the cutter.

According to exemplary aspects, by performing a winding process to wind the cover part 140 of the separator sheet 120 after the perforation process to form through-holes in the cover part 140 of the separator sheet 120 is completed, damage to the unit cell 111 during the perforation process can be prevented.

### (Third aspect)

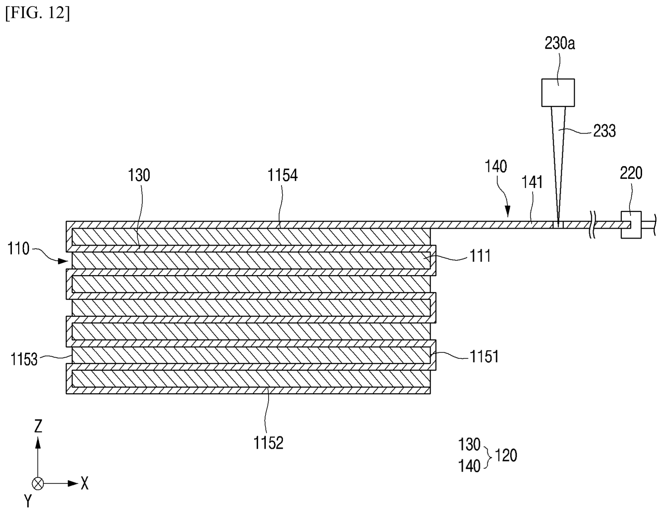

FIG. 12 is a cross-sectional view illustrating a method of fabricating an electrode assembly 100, according to exemplary aspects.

Referring to FIG. 12, in a secondary battery manufacturing device configured to manufacture the electrode assembly 100, the cutter 230a may include a laser cutter configured to emit a laser beam 233. The cutter 230a may irradiate the laser beam 233 onto the cover part 140 of the separator sheet 120 to form through-holes in the cover part 140 of the separator sheet 120. In exemplary aspects, a winding process to wind the cover part 140 of the separator sheet 120 may be performed after the perforation process to form the through-hole in the cover part 140 of the separator sheet 120 is completed, thereby preventing the unit cell 111 from being damaged by the laser beam 233 during the process of irradiating the laser beam 233 to form the through-hole in the separator sheet 120.

### (Fourth aspect)

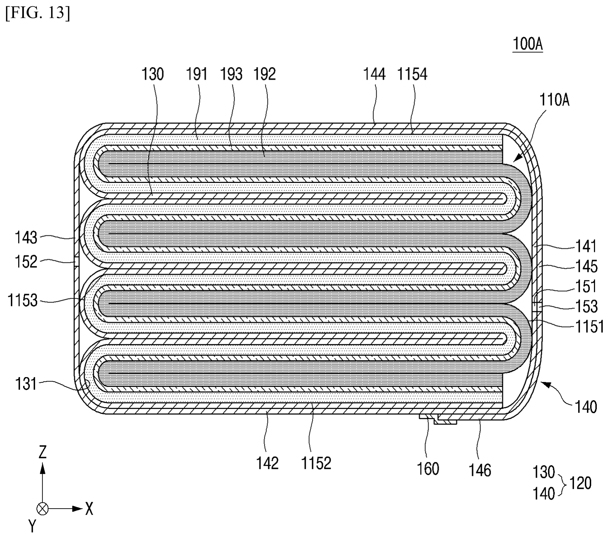

FIG. 13 is a cross-sectional view illustrating an electrode assembly 100A, according to exemplary aspects. In the following, the electrode assembly 100A illustrated in FIG. 13 is described, with particular emphasis on differences from the electrode assembly 100 described with reference to FIGS. 1 through 3.

Referring to FIG. 13, the electrode assembly 100A may include a cell structure 110A, and a separator sheet 120 having a folding part 130 and a cover part 140. The folding part 130 of the separator sheet 120 may extend in a zigzag fashion with multiple bends to define a plurality of vertically separated accommodation spaces 131, and the cell structure 110A may be accommodated within the plurality of accommodation spaces 131 of the folding part 130. A cover part 140 of the separator sheet 120 may surround the cell structure 110A and the folding part 130.

The cell structure 110A may include a first electrode 191, a second electrode 192, and an inner separator 193. The inner separator 193 may be interposed between the first electrode 191 and the second electrode 192. The first electrode 191 may be bent and extend along the folding part 130 of the separator sheet 120 in a zigzag fashion. The first electrode 191 may be a single sheet. The second electrode 192 may be bent and extend along the first electrode 191 or along the folding part 130 of the separator sheet 120 in a zigzag fashion. The second electrode 192 may be a single sheet. An inner separator 193 may be interposed between the first electrode 191 and the second electrode 192. The inner separator 193 may be bent and extend along the first electrode 191 or along the folding part 130 of the separator sheet 120 in a zigzag fashion. The inner separator 193 may be a single sheet.

A method of manufacturing the electrode assembly 100A, includes: a first step of preparing a first structure in which a separator sheet 120, a first electrode 191, an inner separator 193, and a second electrode 192 are stacked one after the other; a second step of forming a second structure in which the first structure is bent in a zigzag shape; and a third step of surrounding the cell structure 110A with the cover part 140 of the separator sheet 120 by repeating the perforation process and the winding process for the cover part 140 of the separator sheet 120 several times. In the second step, as the first structure is bent into a zigzag shape, the folding part 130 of the separator sheet 120 may be bent into a zigzag shape to have a plurality of accommodation spaces 131 for accommodating the cell structure 110A, and the folding part 130 of the separator sheet 120, the first electrode 191, the inner separator 193, and the second electrode 192 may each be bent into a zigzag shape. The third step may include steps S120 to S180 of FIG. 4.

### (Fifth aspect)

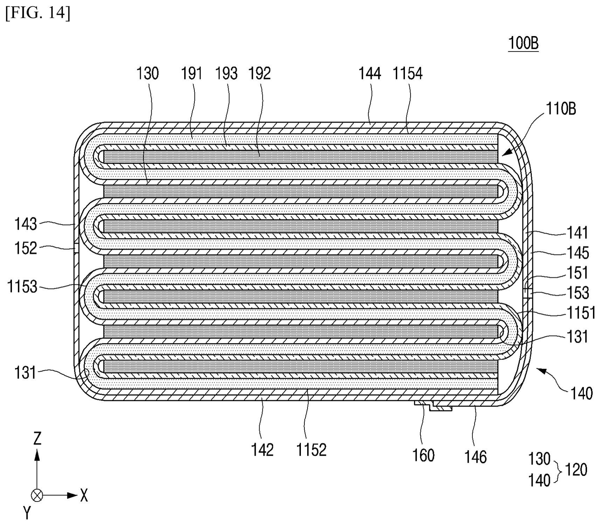

FIG. 14 is a cross-sectional view illustrating an electrode assembly 100B, according to exemplary aspects. In the following, the electrode assembly 100B illustrated in FIG. 14 is described, with particular emphasis on differences from the electrode assembly 100A described with reference to FIG. 13.

Referring to FIG. 14, in the electrode assembly 100B, the folding part 130 of the separator sheet 120 may extend in a zigzag pattern with multiple bends to define a plurality of vertically separated accommodation spaces 131, and the cell structure 110B may be accommodated within the plurality of accommodation spaces 131 of the folding part 130.

The cell structure 110B may include a first electrode 191, an inner separator 193, and a plurality of second electrodes 192. The first electrode 191 and the inner separator 193 may each be a single sheet, and may be bent and extend in a zigzag fashion along the folding part 130 of the separator sheet 120. Some of the plurality of second electrodes 192 may be accommodated in some of the plurality of accommodation spaces 131 of the folding part 130, and other of the plurality of second electrodes 192 may be accommodated in other of the plurality of accommodation spaces 131 of the folding part 130. An inner separator 193 may contact an upper surface and a bottom surface of some of the plurality of second electrodes 192, and the separator sheet 120 may contact an upper surface and a bottom surface of other portions of the plurality of second electrodes 192. Some of the plurality of second electrodes 192 may be spaced apart from segments of the first electrode 191 disposed above and below them by the inner separator 193, and other of the plurality of second electrodes 192 may be spaced apart from other segments of the first electrode 191 disposed above and below them by the separator sheet 120.

A method of manufacturing an electrode assembly 100B includes: a first step of preparing a third structure in which a separator sheet 120, a first electrode 191, and an inner separator 193 are stacked one after the other; a second step of forming a fourth structure by bending the third structure into a zigzag shape and disposing a plurality of second electrodes 192 between the spaces formed by bending the third structure into a zigzag shape; and a third step of surrounding the cell structure 110B with the cover part 140 of the separator sheet 120 by repeating the perforation process and the winding process for the cover part 140 of the separator sheet 120 several times. In the second step, as the third structure is bent in a zigzag shape, the folding part 130 of the separator sheet 120 may be bent in a zigzag shape to have a plurality of accommodation spaces 131, and the folding part 130 of the separator sheet 120, the first electrode 191, and the inner separator 193 may each be bent in a zigzag shape. The third step may include steps S120 through S180 of FIG. 4.

The present disclosure has been described in more detail above with reference to the drawings and aspects. However, it is to be understood that the configurations shown in the drawings or aspects described herein are only one aspect of the disclosure and do not represent all of the technical ideas of the disclosure, and that there may be various equivalents and modifications that may be substituted for them at the time of filing the present disclosure.

## Claims

1. An electrode assembly, comprising:
a separator sheet including a folding part folded in a zigzag pattern to define a plurality of vertically separated accommodation spaces and a cover part extending from the folding part; and
a cell structure accommodated in the plurality of accommodation spaces of the separator sheet, the cell structure including a first electrode and a second electrode,
wherein the cover part of the separator sheet comprises a first side cover part covering a first side of the cell structure, wherein the first side cover part comprises a first through-hole communicating with at least one accommodation space of the plurality of accommodation spaces.

2. The electrode assembly of claim 1, wherein the cover part further comprises a second side cover part covering a second side of the cell structure opposite the first side of the cell structure, the second side cover part comprising a second through-hole communicating with at least one accommodation space of the plurality of accommodation spaces.

3. The electrode assembly of claim 2, wherein the cover part further comprises a third side cover part in contact with the first side cover part, the third side cover part comprising a third through-hole communicating with the first through-hole.

4. The electrode assembly of claim 3, wherein the cover part further comprises:
a first bottom cover part extending between the first side cover part and the second side cover part, the first bottom cover part covering a bottom surface of the cell structure; and
a top cover part extending between the second side cover part and the third side cover part, the top cover part covering an upper surface of the cell structure.

5. The electrode assembly of claim 4, wherein the cover part further comprises a second bottom cover part connected to the third side cover part, the second bottom cover part being fixed to the first bottom cover part.

6. The electrode assembly of claim 1, wherein the separator sheet is a single sheet.

7. The electrode assembly of claim 1, wherein the cell structure comprises a plurality of unit cells spaced apart from each other by the folding part, each unit cell of the plurality of unit cells comprising at least one of the first electrode or the second electrode.

8. The electrode assembly of claim 1, wherein in the cell structure, the first electrode is a single sheet extending in a zigzag along the folding part of the separator sheet.

9. The electrode assembly of claim 8, wherein in the cell structure, the second electrode is a single sheet extending in a zigzag along the first electrode.

10. An electrode assembly manufacturing method, comprising:
preparing a structure comprising a separator sheet and a cell structure, wherein the cell structure comprises a first electrode and a second electrode, and wherein the separator sheet comprises a folding part defining a plurality of accommodation spaces configured to accommodate the cell structure and a cover part connected to the folding part;
forming a first through-hole in a first side cover part of the cover part; and
winding the cover part such that the first side cover part of the cover part faces a first side of the cell structure.

11. The method of claim 10, wherein,
the step of winding the cover part such that the first side cover part of the cover part faces the first side of the cell structure further comprises winding the cover part of the separator sheet so that a first bottom cover part of the cover part connected to the first side cover part of the cover part faces a bottom surface of the cell structure.

12. The method of claim 10, further comprising:
forming a second through-hole in a second side cover part of the cover part; and
winding the cover part of the separator sheet such that the second side cover part of the cover part faces a second side of the cell structure.

13. The method of claim 12, wherein the step of winding the cover part of the separator sheet such that the second side cover part of the cover part faces the second side of the cell structure second winding step further comprises winding the cover part of the separator sheet so that a top cover part of the cover part connected to the second side cover part of the cover part faces an upper surface of the cell structure.

14. The method of claim 12, further comprising:
forming a third through-hole in a third side cover part of the cover part; and
winding the cover part of the separator sheet such that the third side cover part of the cover part contacts the first side cover part,
wherein the first through-hole included in the first side cover part of the cover part is aligned with the third through-hole included in the third side cover part of the cover part.

15. The method of claim 14, wherein
the step of winding the cover part such that the first side cover part of the cover part faces the first side of the cell structure further comprises winding the cover part so that a first bottom cover part of the cover part connected to the first side cover part of the cover part faces a bottom surface of the cell structure, and
the step of winding the cover part of the separator sheet such that the third side cover part of the cover part contacts the first side cover part further comprises winding the cover part so that a second bottom cover part of the cover part connected to the third side cover part of the cover part contacts the first bottom cover part of the separator sheet.
